Europäisches Patentamt

European Patent Office

Office européen des brevets

(19)

(11) Numéro de publication: **0 237 412 B1**

## FASCICULE DE BREVET EUROPEEN

(12)

(45) Date de publication de fascicule du brevet:
**16.10.91**

(51) Int. Cl.5: **H02H 7/08**, H02H 6/00

(21) Numéro de dépôt: **87400453.4**

(22) Date de dépôt: **02.03.87**

(54) **Procédé de protection électronique de moteur électrique et dispositif pour sa mise en oeuvre.**

(30) Priorité: **03.03.86 FR 8602935**

(43) Date de publication de la demande:
**16.09.87 Bulletin 87/38**

(45) Mention de la délivrance du brevet:
**16.10.91 Bulletin 91/42**

(84) Etats contractants désignés:
**BE ES IT NL**

(56) Documents cités:
**GB-A- 2 066 597**
**GB-A- 2 073 969**
**US-A- 4 467 260**
**US-A- 4 544 982**

(73) Titulaire: **MORS**
**4 avenue Vélasquez**
**F-75008 Paris(FR)**

(72) Inventeur: **Andrieux, Jacques**
**2 Groupe Scolaire de la Zac**
**F-95380 Puiseux(FR)**
Inventeur: **Clauss, Edouard**
**11 Square d'Amboise**
**F-95380 Louvres(FR)**
Inventeur: **Saquet, Robert**
**6 rue Jean Zay**
**F-95400 Arnouville(FR)**
Inventeur: **Hamon, Yann**
**37 route du Tour**
**F-44800 Bouaye(FR)**

(74) Mandataire: **Beauchamps, Georges et al**
**Cabinet Z.Weinstein 20, avenue de Friedland**
**F-75008 Paris(FR)**

## Description

La présente invention se rapporte généralement à un procédé de protection électronique, notamment pour moteur électrique, et à un dispositif pour la mise en oeuvre de ce procédé.

La présente invention trouve notamment application pour tout type de moteur industriel utilisé dans l'industrie des transports, de l'aéronautique, de la marine.

On connait déjà des dispositifs de protection tels que des protecteurs thermiques à bilame. Dans de tels protecteurs, la disjonction du moteur s'effectue en fonction du courant uniquement. Ce type de protection n'est pas toujours efficace pour de faibles charges du moteur, et nécessite un long temps de réponse. De plus, les protecteurs thermiques à bilame sont particulièrement sensibles aux conditions environnantes, telles que la température ambiante et présentent un encombrement important.

Le document GB-A-2066597 décrit un procédé et un dispositif de protection électronique de moteur basé sur des modèles thermiques de l'échauffement des enroulements du moteur soit à partir de la mesure des temperatures des enroulements soit à partir du courant circulant dans les enroulements.

La présente invention a pour objet de remédier à ces inconvénients en remplaçant le protecteur à bilame connu par un dispositif de protection électronique, susceptible de donner une image thermique du moteur à tout instant et de mettre le moteur à l'arrêt en cas de suréchauffement.

Pour atteindre ce but, la présente invention consiste en un procédé de protection de moteur électrique contre le suréchauffement selon la revendication 1 et un dispositif de mise en oeuvre de ce procédé selon le revendication 9.

Ainsi, un tel procédé permet de programmer pour chaque type de moteur, une valeur de courant nominal et de hauteur d'arbre, propres au moteur à protéger, et de mettre le moteur à l'arrêt sur la base d'un suréchauffement et non pas uniquement en fonction du courant. Un dispositif pour la mise en oeuvre de ce procédé peut donc être utilisé pour plusieurs modèles de moteurs et, du fait qu'il est électronique, présente un temps de réponse rapide.

Selon une variante, un tel procédé consiste également, en cas de suréchauffement du moteur, à afficher la valeur maximale d'échauffement calculée provoquant l'arrêt du moteur.

Ainsi, l'état thermique du moteur est reflèté pour chaque arrêt.

Selon une autre variante, le procédé consiste également, dans le cas où le moteur électrique précité est du type triphasé, à :

- calculer la valeur moyenne des courants efficaces mesurés ;
- calculer l'écart entre le courant efficace mesuré et la valeur moyenne, pour chaque phase ; et
- produire un signal de commande de l'arrêt du moteur lorsque ledit écart est supérieur à une valeur initialement programmée et résultant d'un déséquilibre de phase.

Grâce à cette particularité, les déséquilibres de phase du moteur sont détectés à tout instant, ce qui ajoute un critère de protection au moteur.

L'invention sera mieux comprise, et d'autres buts et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :

- la figure 1 est une vue de dessus du dispositif selon la présente invention ;
- la figure 2 est une représentation schématique partielle du dispositif selon la présente invention ;
- la figure 3 est une représentation générale schématique du dispositif selon la présente invention;
- la figure 4 est le schéma électronique de l'interrupteur statique selon la présente invention ;
- la figure 5 représente un algorithme de traitement des données selon la présente invention.

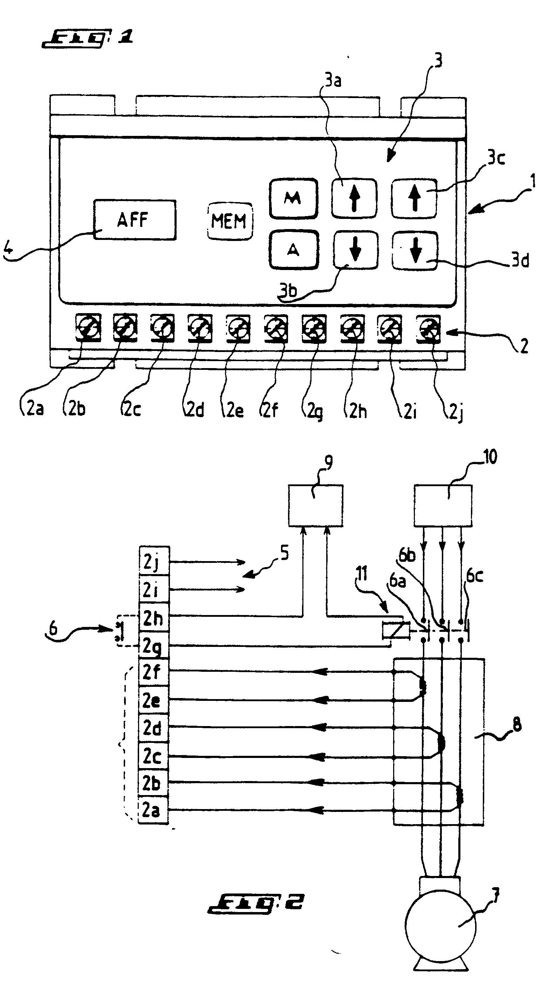

En se référant à la figure 1, le dispositif de protection selon l'invention, se présente sous forme d'un boîtier 1 composé d'un bornier 2, d'un clavier sérigraphique à touches 3 et de moyens d'affichage 4.

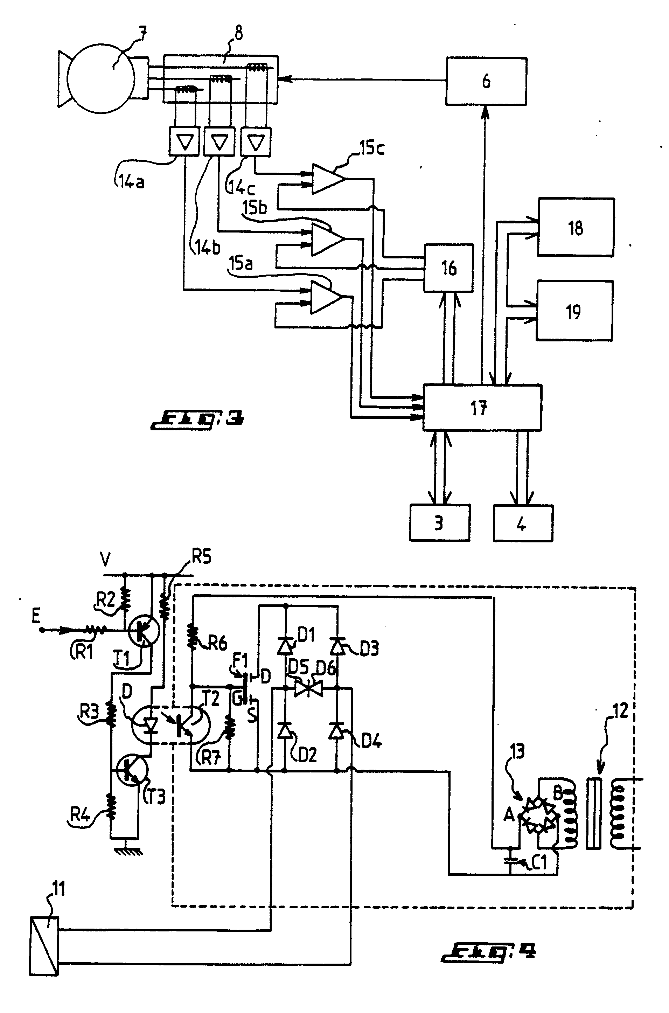

Le bornier 2 est équipé de dix bornes 2a...2j qui sont destinées à être reliées à l'alimentation du dispositif 5, à l'interrupteur statique 6 et au moteur 7 par l'intermédiaire d'une boîte à transformateurs d'intensité 8 comme le montre la figure 2.

Le clavier sérigraphique à touches comporte 7 touches dont deux touches M et A respectivement pour la marche et l'arrêt du protecteur, deux touches 3a, 3b permettant la programmation du courant nominal IN par incrémentation ou décrémentation, deux touches 3c, 3d permettant la programmation de la hauteur d'arbre H par incrémentation ou décrémentation.

Selon la figure 2, la liaison du dispositif protecteur au moteur est réalisée par les paires de bornes 2a-2b, 2c-2d 2e-2f, respectivement reliées à chacune des phases du moteur pour la mesure des courants à chaque phase.

L'interrupteur statique 6 muni de contacts 6a,6b, 6c, est relié en série à la borne 2h du bornier 2, à une source 9 et une deuxième borne 2g du bornier 2 entre la source du moteur 10 et le moteur 7.

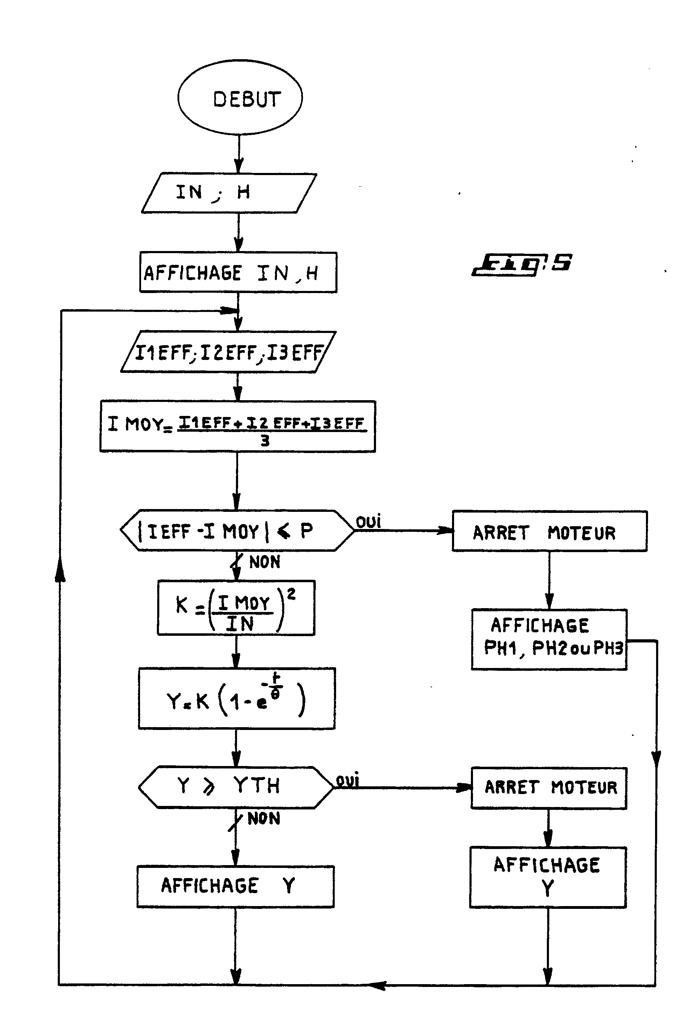

D'une façon plus générale, en référence à la figure 3, le dispositif de protection selon la présente invention comprend un moyen d'entrée des données tel qu'un clavier sérigraphique 3 à touches, des moyens d'affichage 4 pour afficher les données, la valeur d'échauffement du moteur, et/ou le déséquilibre de phase, reliés à un moyen calculateur tel qu'un microprocesseur 17 susceptible d'effectuer un calcul d'échauffement du moteur pour les valeurs de courant efficace mesurées. Le calculateur 17 est connecté par l'intermédiaire d'un bus, à deux mémoires 18, 19, l'une contenant le programme du calculateur et l'autre contenant un tableau de correspondance entre les hauteurs d'arbre et les constantes de temps thermiques des différents modèles de moteurs. La mémoire 19 peut être avantageusement du type programmable effaçable électriquement EAROM. Le calculateur est relié à un interrupteur statique 6 qui sera décrit ci-après, pour la commande de l'arrêt du moteur.

Le moteur est relié au microprocesseur par l'intermédiaire d'une boîte à transformateurs d'intensité. Chaque bobine correspondant à une phase, est reliée respectivement à un amplificateur 14a, 14b, 14c puis à une des entrées d'un comparateur 15a, 15b, 15c. La deuxième entrée de chacun des comparateurs, est connectée à une sortie respective d'un convertisseur numérique analogique 16, lui-même relié au microprocesseur 17.

L'interrupteur statique 6, selon la figure 4, comprend une résistance d'entrée R1 reliée à la base d'un premier transistor PNP T1 et une résistance R2 connectée entre une source de tension V et la base dudit transistor. L'émetteur du transistor T1 est relié directement à la source de tension V et son collecteur est relié par l'intermédiaire d'une résistance R3 à la base d'un transistor du type NPN T3. La base de ce dernier est reliée à la masse par une résistance R4 et par son émetteur. Le collecteur du transistor T3 est connecté à la source de tension V au moyen d'une résistance R5 et d'une diode D d'un photo-transistor. Le transistor de type NPN dudit photo-transistor T2 est relié par son collecteur à un transformateur 12, isolant galvaniquement l'interrupteur statique, au moyen d'un pont redresseur à diodes 13 et d'une résistance R6. L'émetteur dudit transistor T2 est relié à sa base et à la grille G d'un transistor du type FET F1 par l'intermédiaire d'une résistance R7, et est également relié à la borne B du pont redresseur à diodes 13 précité. La source S du transitor FET F1 est reliée à ladite borne B et son drain D est relié aux cathodes de deux diodes D1, D3. Les anodes des deux diodes D1 et D3 sont reliées respectivement à l'anode de deux diodes D5 et D6 connectées entre elles par leurs cathodes, et sont reliées à la cathode respective de deux diodes D2, D4. Les anodes de ces dernières diodes sont reliées à la borne B du pont redresseur à diodes 13. Une capacité C1 est reliée entre les deux bornes A, B du pont redresseur à diodes 13. Les anodes respectives des deux diodes D5 et D6 sont reliées au relais 11 de commande de l'arrêt ou de la marche du moteur.

Le fonctionnement du dispositif protecteur selon la présente invention est donné généralement par l'algorithme de traitement du microprocesseur représenté en figure 5. A la mise sous tension du dispositif par l'intermédiaire de la touche marche M du clavier 3, l'utilisateur fournit au microprocesseur les paramètres relatifs au courant nominal IN et à la hauteur d'arbre H du moteur à protéger. L'utilisateur valide l'entrée de chacun de ces paramètres par la touche de programmation MEM. Le microprocesseur commande alors l'affichage sur les moyens d'affichage 4 de chacune des valeurs des paramètres. Ensuite, le moyen calculateur prend connaissance des valeurs des courants efficaces I1EFF ; I2EFF ; I3EFF mesurées à chaque phase du moteur. Puis, le calculateur effectue la moyenne des courants efficaces en sommant les trois courants efficaces mesurés et en les divisant par trois. Afin de constater l'existence ou non d'un déséquilibre de phase, l'écart entre chacune des valeurs efficaces mesurées et le courant moyen calculé est comparé à une valeur d'écart admissible P qui est préprogrammée au sein du calculateur. Dans le cas où cet écart dépasse ladite valeur programmé P le microprocesseur commande l'arrêt du moteur et l'affichage de la phase PH1 ou PH2 ou PH3 pour laquelle il y a eu déséquilibre.

Le calculateur procède ensuite au calcul de l'échauffement du moteur pour les courants efficaces mesurés. Tout d'abord, la constante thermique K définie comme étant égale au carré du rapport du courant moyen au courant nominal va être calculée. Ensuite la valeur d'échauffement Y du moteur va être déterminée suivant l'équation :

$$Y = K \left(1 - e^{\frac{-t}{\bar{\theta}}}\right)$$

Cette valeur d'échauffement calculée est alors comparée à une valeur d'échauffement prédéterminée YTH qui a été programmée dans le calculateur. Dans le cas où la valeur d'échauffement calculée dépasse la valeur d'échauffement théorique, le moyen calculateur commande l'arrêt du moteur et l'affichage sur les moyens d'affichage 4 de la valeur d'échauffement maximum calculée. Dans le cas où la valeur d'échauffement calculée n'excède pas la valeur d'échauffement théorique, le microprocesseur commande l'affichage de la valeur d'échauffement calculée.

Ainsi, à tout instant apparait sur le moyen d'affichage 4 la valeur d'échauffement Y calculée pour les valeurs de courant efficaces mesurées.

Avantageusement, entre la commande de l'arrêt du moteur et l'arrêt effectif du moteur, le calculateur continue à calculer la valeur d'échauffement et garde à l'affichage, la valeur d'échauffement maximale calculée.

Pour commander l'arrêt du moteur, le microprocesseur fournit un signal logique à l'entrée E de l'interrupteur statique, comme il apparaît à la figure 4. Le transistor FET F1 change alors d'état et valide l'ouverture du relais 11. La source du moteur 10 est ainsi coupée du moteur par ouverture des contacts 6a, 6b, 6c, et le moteur n'est plus alimenté.

La mesure des courants efficaces s'effectue par approximations successives : la tension U mesurée à une phase est comparée au moyen du comparateur 15a, 15b ou 15c à une valeur de tension prédéterminée UTH fournie par le microprocesseur par l'intermédiaire du convertisseur numérique analogique 16. Le comparateur produit alors un signal logique selon le résultat de la comparaison, à destination du microprocesseur. Ainsi, selon ce signal logique, le microprocesseur incrémentera ou décrémentera la valeur de tension prédéterminée UTH qui sera alors comparée avec la tension U mesurée, et ainsi de suite. Par ce moyen, la valeur de tension prédéterminée UTH tend à approximer de façon très précise la valeur de tension mesurée U pour chaque phase.

A titre d'exemple, le protecteur électronique commande l'arrêt du moteur pour une valeur de surchauffe du moteur de 110% avec un courant ayant pour valeur 1,05 IN.

Le dispositif protecteur selon la présente invention, possède également une fonction TEST qui permet, à la mise en marche du système, de vérifier son bon état de fonctionnement.

Selon une autre particularité, l'utilisateur peut savoir si le système est en état de marche ou à l'arrêt : en effet, si le dispositif protecteur est à l'arrêt, l'affichage est clignotant tandis que dans le cas où le dispositif est en marche, l'affichage est fixe. De plus, il est possible de relire à tout instant la valeur du courant nominal ou de la hauteur d'arbre programmé par un appui fugitif des touches de programmation du courant nominal 3a, 3b ou de programmation de la hauteur d'arbre 3c, 3d.

Comme il ressort des explications précédentes, la présente invention est particulièrement avantageuse en tant que dispositif disjoncteur différentiel c'est-à-dire qui analyse l'état de chacune des phases; de plus, la disjonction s'opère par l'intermédiaire d'un interrupteur statique qui est isolé galvaniquement de tout le reste du système, comme il apparaît en référence à la figure 4.

## Revendications

1. Procédé de protection d'un moteur électrique, du type triphasé, contre le suréchauffement de celui-ci, consistant à :

   - initialement programmer une valeur de courant nominal (IN) de fonctionnement du moteur ;
   - mémoriser la valeur du courant nominal (IN) ;
   - initialement programmer une valeur de hauteur d'arbre (H) représentative de la constante de temps thermique ($\theta$) du moteur ;
   - mémoriser la hauteur d'arbre (H) ;
   - mesurer les valeurs des courants efficaces (I1EFF ; I2EFF ; I3EFF) respectivement aux phases du moteur ;
   - calculer la valeur moyenne (IMOY) des courants efficaces mesurés (I1EFF ; I2EFF ; I3EFF) ;
   - calculer, en fonction de la valeur du courant nominal (IN), de la hauteur d'arbre (H) et des valeurs mesurées des courants efficaces (I1EFF ; I2EFF ; I3EFF), une valeur (Y) représentant l'échauffement du moteur à partir de la relation ci-dessous :

$$Y = K \left( 1 - e^{-\frac{t}{\theta}} \right)$$

   où
   K est une constante d'échauffement égale au carré du rapport de la valeur du courant moyen mesuré à la valeur du courant nominal,

   t est le temps,

   $\theta$ est la constante de temps thermique du moteur ;

   - comparer la valeur calculée (Y) de l'échauffement du moteur à une valeur d'échauffement (YTH) initialement programmée ; et
   - produire un signal de commande de l'arrêt du moteur lorsque la valeur calculée (Y) de l'échauffement du moteur est supérieure à la valeur programmée (YTH) d'échauffement de celui-ci.

2. Procédé selon la revendication 1, caractérisé en ce qu'il consiste à mesurer la valeur de chaque courant efficace par approximations successives.

3. Procédé selon la revendication 1 ou 2, caractérisé en ce qu'il consiste, en cas de suréchauffement du moteur, à afficher la valeur maximale (YMAX) d'échauffement calculée provoquant l'arrêt du moteur.

4. Procédé selon l'une des revendications précédentes, caractérisé en ce qu'il consiste de plus à afficher, de façon continue, la valeur calculée (Y) d'échauffement du moteur.

5. Procédé selon la revendication 1, caractérisé en ce qu'il consiste à afficher, consécutivement à sa programmation, la valeur du courant nominal précité (IN) et à ensuite afficher, consécutivement à sa programmation, la valeur de la hauteur d'arbre (H).

6. Procédé selon la revendication 1, caractérisé en ce qu'il consiste également à calculer l'écart entre le courant efficace mesuré et la valeur moyenne pour chaque phase et à produire un signal de commande de l'arrêt du moteur lorsque ledit écart est supérieur à une valeur initialement programmée (P) et résultant d'un déséquilibre de phases.

7. Procédé selon la revendication 6, caractérise en ce qu'il consiste à identifier par affichage la phase (PH1 ; PH2 ; PH3) pour laquelle il y a déséquilibre.

8. Procédé selon la revendication 2, caractérisé en ce qu'il consiste à :

   - mesurer une valeur de tension (U) correspondant au courant de phase pour chaque phase du moteur ;
   - produire une valeur de tension prédéterminée (UTH) ;
   - comparer la valeur de tension (U) à la valeur de tension prédéterminée (UTH) ;
   - produire un signal logique selon le résultat de la comparaison ;
   - incrémenter ou décrémenter la valeur de tension prédéterminée (UTH) suivant le signal logique ; et
   - le cas échéant, recommencer l'étape de comparaison.

9. Dispositif pour la mise en oeuvre du procédé tel que défini aux revendiations 1 à 8, caractérisé en ce qu'il comprend :

   - un moyen calculateur (17), tel qu'un microprocesseur, relié au moteur électrique (7) précité ; et
   - un clavier d'entrée (3) dans le moyen calculateur des données relatives à l'intensité nominale et à la hauteur d'arbre précitées,

   ledit moyen calculateur (17) étant adapté à calculer la valeur (Y) d'échauffement du moteur à partir de la valeur du courant nominal (IN), de la hauteur d'arbre (H), des valeurs mesurées des courants efficaces, selon la formule précitée, à comparer la valeur calculée (Y) d'échauffement à la valeur d'échauffement (YTH) précitée et à produire le signal de commande d'arrêt du moteur.

10. Dispositif selon la revendication 9, caractérisé en ce qu'il comprend une mémoire (19) destinée à mémoriser un tableau contenant les valeurs des hauteurs d'arbres et les valeurs des constantes de temps correspondantes pour chaque moteur.

11. Dispositif selon la revendication 9 ou 10, caractérisé en ce qu'il comprend un circuit électronique (6) formant interrupteur statique relié entre le moyen calculateur (17) et le moteur (7) et recevant le signal de commande du moyen calculateur pour arrêter le moteur.

12. Dispositif selon l'une des revendications 9 à 11, caractérisé en ce que le circuit électronique (6) précité est galvaniquement isolé de l'alimentation du dispositif et déclenche l'arrêt du moteur par l'intermédiaire d'un relais (11) à contact.

13. Dispositif selon l'une des revendications 9 à 12, caractérisé en ce qu'il comprend :

   - un moyen amplificateur pour chaque phase (14a, 14b, 14c), relié au moteur (7), adapté à amplifier la valeur de tension (U) mesurée ;
   - un convertisseur numérique analogique (16) relié au moyen calculateur (17), destiné à convertir la valeur de tension prédéterminée (UTH) précitée en une tension analogique ; et
   - un moyen comparateur (15a, 15b, 15c) pour chaque phase, destiné à comparer la valeur de tension (U) à ladite tension analogique et produire un signal logique suivant le résultat de la comparaison.

**14.** Dispositif selon l'une des revendications 9 à 13, caractérisé en ce qu'il comprend des moyens d'affichage (4) reliés au moyen calculateur (17) adaptés à afficher la valeur du courant nominal (IN) précitée, la valeur de la hauteur d'arbre (H) précitée, la valeur calculée d'échauffement (Y) du moteur, et à identifier la phase (PH1 ; PH2 ; PH3) précitée pour laquelle il y a déséquilibre.

**15.** Dispositif selon l'une des revendications 9 à 14, caractérisé en ce qu'il comprend un clavier sérigraphique (3) composé d'une touche (M) destinée à la mise en service du dispositif, une touche (A) destinée à l'arrêt du dispositif, un groupe de deux touches (3a, 3b) destinées respectivement à augmenter ou décroître la valeur du courant nominal (IN) précitée à programmer, un groupe de deux touches (3c, 3d) destinées respectivement à augmenter ou à décroître la valeur de la hauteur d'arbre (H) précitée à programmer, une touche (MEM) destinée à valider la programmation de chacune des valeurs à programmer.

**16.** Dispositif selon la revendication 10, caractérisé en ce que ladite mémoire est une mémoire programmable électriquement effaçable (EAROM).

## Claims

**1.** Method of protection of an electric motor of the three-phase type against overheating thereof, consisting in:

- initially programming a value of rated operating current (IN) of the motor;
- storing the value of the rated current (IN);
- initially programming a shaft height value (H) representative of the thermal time factor ( ) of the motor;
- storing the shaft height (H);
- measuring the values of the effective currents (I1EFF; I2EFF; I3EFF) at the phases of the motor, respectively;
- computing the mean value (IMOY) of the measured effective currents (I1EFF; I2EFF; I3EFF);
- calculating versus the value of the rated current (IN), of the shaft height (H) and of the measured values of the effective currents (I1EFF; I2EFF; I3EFF), a value (Y) representing the heating of the motor from the relationship here below:

$$Y = K \left( 1 - e^{-\frac{t}{\theta}} \right)$$

where

K is a heating factor equal to the square of the ratio of the value of the measured average current to the value of the rated current,

t is the time,

$\theta$ is the thermal time factor of the motor;

- comparing the computed value (Y) of the heating of the motor to an initially programmed heating value (YTH);and
- producing a signal operating the stop of the motor when the computed value (Y) of the heating of the motor is higher than the programmed heating value (YTH) thereof.

**2.** Method according to claim 1, characterized in that it consists in measuring the value of each effective current by continual approach.

**3.** Method according to claim 1 or 2, characterized in that it consists in case of overheating of the motor in displaying the computed maximum heating value (YMAX) causing the stop of the motor.

**4.** Method according to one of the foregoing claims, characterized in that it consists additionally in continuously displaying the computed heating value (Y) of the motor.

**5.** Method according to claim 1, characterized in that it consists in displaying subsequently to its programming the value of the aforesaid rated current (IN) and then to display subsequently to its programming the value of the shaft height (H).

**6.** Method according to claim 1, characterized in that it also consists in computing the difference between the measured effective current and the mean value for each phase and in producing a signal operating the stop of the motor when the said difference is higher than an initially programmed value (P) and resulting from a phase imbalance.

**7.** Method according to claim 6, characterized in that it consists in identifying through display the phase (PH1; PH2; PH3) for which there is an imbalance.

8. Method according to claim 2, characterized in that it consists in:

- measuring a voltage value (U) corresponding to the phase current for each phase of the motor;
- producing a predetermined voltage value (UTH);
- comparing the voltage value (U) with the predetermined voltage value (UTH);
- producing a logic signal according to the result of the comparison;
- incrementing or decrementing the predetermined voltage value (UTH) according to the logic signal;and
- if need be, beginning the comparison step again.

9. Device for carrying out the method such as defined in claims 1 to 8, characterized in that it comprises:

- a computer means (17) such as microprocessor connected to the aforesaid electric motor (7);and
- a keyboard (3) for entering into the computer means data relating to the aforesaid rated current and shaft height,
- said computer means (17) being adapted to calculate the heating value (Y) of the motor from the value of the rated current (IN), of the shaft height (H), of the measured values of the effective currents according to the aforesaid formula, comparing the computed heating value (Y) to the aforesaid heating value (YTH) and producing the control signal for the stop of the motor.

10. Device according to claim 9, characterized in that it comprises a memory (19) adapted to store a table containing the values of the shaft heights and the corresponding values of the time factors for each motor.

11. Device according to claim 9 or 10, characterized in that it comprises an electronic circuit (6) forming a static switch connected between the computer means (17) and the motor (7) and receiving the control signal from the computer means for stopping the motor.

12. Device according to one of claims 9 to 11, characterized in that the aforesaid electronic circuit (6) is galvanically insulated from the supply of the device and triggers the stop of the motor through the medium of a contact relay (11).

13. Device according to one of claims 9 to 12, characterized in that it comprises:

- an amplifying means for each phase (14a, 14b, 14c) connected to the motor (7) and adapted to amplify the measured voltage value (U);
- a digital-analog converter (16) connected to the computer means (17) and adapted to convert the aforesaid predetermined voltage value (UTH) into an analog voltage;and
- a comparator means (15a, 15b, 15c) for each phase, adapted to compare the voltage value (U) to the said analog voltage and to produce a logic signal according to the result of the comparison.

14. Device according to one of claims 9 to 13, characterized in that it comprises display means (4) connected to the computer means (17) and adapted to display the aforesaid value of rated current (IN), the aforesaid value of the shaft height (H), the computed heating value (Y) of the motor and to identify the aforesaid phase (PH1; PH2; PH3) for which there is an imbalance.

15. Device according to one of claims 9 to 14, characterized in that it comprises a serigraphic keyboard (3) consisting of one key (M) adapted for putting the device into service, a key (A) adapted for stopping the device, a group of two keys (3a, 3b) respectively adapted to increase or to decrease the aforesaid value of rated current (IN) to be programmed, a group of two keys (3c, 3d) respectively adapted to increase or to decrease the aforesaid value of the shaft height (H) to be programmed, a key (MEN) adapted to enable the programming of each one of the values to be programmed.

16. Device according to claim 10, characterized in that the said memory is a programmable electrically rasable memory (EAROM).

## Patentansprüche

1. Verfahren zum Schutz eines elektrischen Motors der Dreiphasenbauart gegen die Überhitzung desselben, die darin besteht:

- einen Betriebsnennstromwert (IN) des Motors ursprünglich zu programmieren;
- den Nennstromwert (IN) zu speichern;

- einen die thermische Zeitkonstante ($\theta$) des Motors darstellenden Wellenhöhewert (H) anfänglich zu programmieren;
- die Wellenhöhe (H) zu speichern;
- die Werte der Wirkströme (I1EFF ; I2EFF ; I3EFF) jeweils in den Phasen des Motors zu messen;
- den Mittelwert (IMOY) der gemessenen Wirkströme (I1EFF ; I2EFF ; I3EFF) zu errechnen;
- in Abhängigkeit des Wertes des Nennstroms (IN), der Wellenhöhe (H) und der gemessenen Wirkströme (I1EFF ; I3EFF) , einen die Erwärmung des Motors darstellenden Wert (Y) aus der nachstehenden Beziehung auszurechnen:

$$Y = K \left(1 - e^{-\frac{t}{\theta}}\right)$$

wobei
K eine dem Quadrat des Verhältnisses des gemessenen Mittelstromwertes zu dem Nennstromwert gleiche Erwärmungskonstante ist,

t die Zeit ist,

$\theta$ die thermische Zeitkonstante des Motors ist;

- den errechneten Wert (Y) der Erwärmung des Motors mit einem ursprünglich programmierten Erwärmungswert (YTH) zu vergleichen; und
- ein das Stillstehen des Motors steuerndes Signal zu erzeugen, wenn der errechnete Wert (Y) der Erwärmung des Motors grösser als der programmierte Erwärmungswert (YTH) desselben ist.

2. Verfahren nach Anspruch 1, dadurch gekennzeichnet, dass es darin besteht, den Wert jedes Wirkstromes durch aufeinanderfolgende Näherungen zu messen.

3. Verfahren nach Anspruch 1 oder 2, dadurch gekennzeichnet, dass es darin besteht, im Falle der Überhitzung des Motors, den das Stillstehen des Motors veranlassenden, errechneten Höchsterwärumungswert (YMAX) anzuzeigen.

4. Verfahren nach einem der vorangehenden Ansprüche, dadurch gekennzeichnet, dass es darin besteht, ausserdem den errechneten Erwärmungswert (Y) des Motors in kontinuierlicher Weise anzuzeigen.

5. Verfahren nach Anspruch 1, dadurch gekennzeichnet, dass es darin besteht, den Wert des vorgenannten Nennstroms (IN) im Anschluss an seine Programmierung anzuzeigen und dann den Wert der Wellenhöhe (H) im Anschluss an seine Programmierung anzuzeigen.

6. Verfahren nach Anspruch 1, dadurch gekennzeichnet, dass es ebenfalls darin besteht, den Unterschied zwischen dem gemessenen Wirkstrom und dem Mittelwert für jede Phase zu errechnen und ein Signal zu erzeugen, welches das Stillstehen des Motors bewirkt, wenn der besagte Unterschied grösser als der ursprünglich programmierte und sich aus einer Phasen-Unsymmetrie ergebene Wert ist.

7. Verfahren nach Anspruch 6, dadurch gekennzeichnet, dass es darin besteht, die Phase (PH1 ; PH2 ; PH3) für welche eine Unsymmetrie besteht, durch Anzeige zu erkennen.

8. Verfahren nach Anspruch 2, dadurch gekennzeichnet, dass es darin besteht:

- einen dem Phasenstrom entsprechenden Spannungswert (U) für jede Phase des Motors zu messen;
- einen vorbestimmten Spannungswert (UTH) zu erzeugen;
- den Spannungswert (U) mit dem vorbestimmten Spannungswert (UTH) zu vergleichen.
- eine Logiksignal gemäss dem Ergebnis des Vergleiches zu erzeugen;
- den vorgenannten Spannungswert (UTH) gemäss dem Logiksignal um Inkremente zu vergrössern oder zu verkleinern; und
- gegebenenfalls den Vergleichsvorgang wieder anzufangen.

9. Vorrichtung zur Durchführung des wie in den Ansprüchen 1 bis 8 dargelegten Verfahrens, dadurch gekennzeichnet, dass sie umfasst:

- ein mit dem vorgenannten elektrischen Motor (7) verbundenes Rechnungsmittel (17) wie ein Mikroprozessor; und
- ein Tastenfeld (3) zur Eingabe von Daten bezüglich der vorgenannten Nennstromstärke und Wellenhöhe in das Rechnungsmittel,
- wobei das Rechnungsmittel (17) angepasst ist, um den Erwärumungswert (Y) des Motors aus dem Nennstromwert (IN), der Wellenhöhe (H) den gemessenen Werten der Wirkströme gemäss der vorgenannten Formel zu errechnen, den errechneten Erwärmungswert (Y) mit dem vorgenannten Erwärmungswert (YEH) zu vergleichen und das das Stillstehen des Motors bewirkende Signal zu erzeugen.

10. Vorrichtung nach Anspruch 9, dadurch gekennzeichnet, dass sie einen zum Speichern einer die Werte der Wellenhöhen und die entsprechenden Werte der Zeitkonstanten für jeden Motor enthaltenen Tafel bestimmeten Speicher (19) umfasst.

11. Vorrichtung nach Anspruch 9 oder 10, dadurch gekennzeichnet, dass sie einen einen statischen Schalter bildenden, zwischen dem Rechnungsmittel (17) und dem Motor (7) angeschlossenen und das Steuersignal zum Stillstehen des Motors von dem Rechnungsmittel empfangenden elektronischen Schaltkreis (6) aufweist.

12. Vorrichtung nach einem der Ansprüche 9 bis 11, dadurch gekennzeichnet, dass der vorgenannte elektronische Schaltkreis (6) gegenüber der Speisung der Vorrichtung galvanisch isoliert ist und das Stillstehen des Motors über ein Kontaktrelais (11) auslöst.

13. Vorrichtung nach einem der Ansprüche 9 bis 12, dadurch gekennzeichnet, dass sie umfasst:

- ein an den Motor (7) angeschlossenes, zur Verstärkung des gemessenen Spannungswertes (U) angepasstes Verstärkungsmittel für jede Phase (14a, 14b, 14c);
- einen an das Rechnungsmittel (17) angeschlossenen und zum Umsetzen des vorgenannten vorbestimmten Spannungswertes (UTH) in eine Analogspannung bestimmten Digital-Analogumsetzer (16); und
- ein zum Vergleich des Spannungswertes (U) mit der besagten Analogspannung und zur Erzeugung eines Logiksignals gemäss dem Ergebnis des Vergleichs bestimmtes Vergleichungsmittel (15a , 15b , 15c) für jede Phase.

14. Vorrichtung nach einem der Ansprüche 9 bis 13, dadurch gekennzeichnet, dass es an das Rechnungsmittel (17) angeschlossene, zur Anzeige des vorgenannten Nennstromwertes (IN), des vorgenannten Wellenhöhenwertes (H), des errechneten Erwärumungswertes (Y) des Motors und zur Erkennung der vorgenannten Phase (PH1 ; PH2 ; PH3) für welche es eine Unsymmetrie gibt, angepasste Anzeigemittel (4) aufweist.

15. Vorrichtung nach einem der Ansprüche 9 bis 14, dadurch gekennzeichnet, dass sie ein serigrafisches Tastenfeld (3) umfasst, bestehend aus einer zum Inbetriebsetzen der Vorrichtung bestimmten Taste (M) , einer zum Ausserbetriebsetzen der Vorrichtung bestimmten Taste (A), einer Gruppe von zwei, jeweils zur Steigerung bzw. zur Verminderung des zu programmierenden vorgenannten Nennstromwertes (IN) bestimmten Tasten (3a , 3b) , einer Gruppe von zwei, jeweils zur Steigerung bzw. zur Verminderung des zu programmierenden vorgenannten Wellenhöhenwertes (H) bestimmten Tasten (3c , 3d), einer zum Gültigmachen der Programmierung jedes der zu programmierenden Werte bestimmten Taste (MEM).

16. Vorrichtung nach Anspruch 10, dadurch gekennzeichnet, dass der besagte Speicher ein programmierbarer, elektrisch löschbarer Speicher (EAROM) ist.

*Fig. 1*

*Fig. 2*

FIG 3

FIG 4

11

```
                    ┌─────────┐
                   (  DEBUT   )
                    └────┬────┘
                         │
                    ╱─────────╱
                   ╱  IN ; H ╱
                  ╱─────────╱
                         │
              ┌──────────────────────┐
              │  AFFICHAGE IN , H    │
              └──────────┬───────────┘
                         │
                 ╱──────────────────────╱
                ╱ I1EFF; I2EFF, I3EFF  ╱
               ╱──────────────────────╱
                         │
            ┌──────────────────────────────────┐
            │ I MOY = (I1EFF + I2 EFF + I3EFF)/3│
            └────────────────┬─────────────────┘
                             │
                     ╱───────────────────╲        oui    ┌──────────────────┐
                    ╱ |IEFF -I MOY| < P    ╲──────────────│  ARRET MOTEUR    │
                     ╲───────────────────╱              └────────┬─────────┘
                         │ NON                                    │
                ┌──────────────────┐                   ┌──────────────────┐
                │ K = (I MOY/IN)²  │                   │    AFFICHAGE      │
                └────────┬─────────┘                   │ PH1, PH2 ou PH3   │
                         │                             └──────────────────┘
              ┌──────────────────────┐
              │  Y = K(1 - e^(-t/θ)) │
              └──────────┬───────────┘
                         │
                 ╱───────────────╲        oui    ┌──────────────────┐
                ╱  Y ⩾ YTH        ╲──────────────│  ARRET MOTEUR    │
                 ╲───────────────╱              └────────┬─────────┘
                         │ NON                            │
              ┌──────────────────────┐          ┌──────────────────┐
              │   AFFICHAGE  Y       │          │    AFFICHAGE      │
              └──────────────────────┘          │       Y          │
                                                └──────────────────┘
```

$$I\ MOY = \frac{I1EFF + I2\ EFF + I3EFF}{3}$$

$$K = \left(\frac{I\ MOY}{IN}\right)^2$$

$$Y = K\left(1 - e^{-\frac{t}{\theta}}\right)$$

**FIG 5**